# EUROPEAN PATENT APPLICATION

(11) **EP 1 900 495 A2**
(43) Date of publication of application: **19.03.2008**
(21) Application number: 07115766.3
(22) Date of filing: 05.09.2007
(51) Int. Cl.: B29C 45/00, B29C 45/34, F16H 55/02

(54) **Resin gear and mold for injection-molding of the resin gear**

(30) Priority: 14.09.2006 JP 2006249153
(71) Applicant: Enplas Corporation, Kawaguchi-shi, Saitama 332-0034 (JP)
(72) Inventor: Kashimura, Noritake, Kawaguchi-shi Saitama 332-0034 (JP)
(74) Representative: McIlroy, Steven David

(57) **Abstract**

Poor appearances, such as burns, black streaks, and short shots, that tend to occur near an outer circumference side edge of a tooth crest when a resin face gear is formed by injection molding, as a result of gas within a cavity not being smoothly discharged, is prevented.

A projecting section (13) is formed on an outer peripheral surface of teeth (12) and on an outer peripheral surface of a web (11) in a resin face gear (10), projecting in an outward radial direction. A parting line of a mold is formed passing through a peak formed near a tooth crest edge on the projecting section.

## Description

### BACKGROUND OF THE INVENTION

### 1. Field of the Invention

The present invention relates to a resin face gear used in a power transmission device for various automobile components, industrial machineries, and precision machineries, and an injection-molding mold used when the resin face gear is formed by injection molding.

### 2. Description of the Related Art

Resin gears that are lighter and have quieter operation noise than metal gears have been widely used in power transmission devices for various automobile components and industrial machineries.

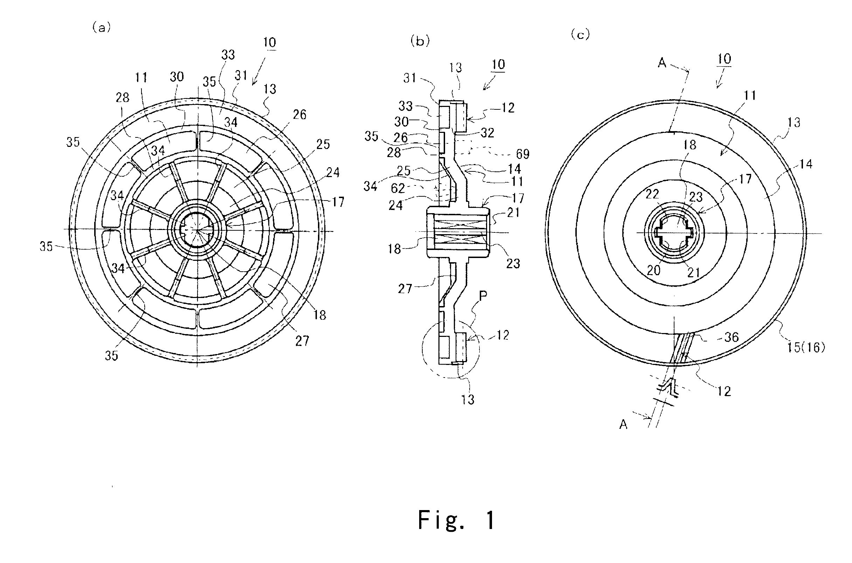

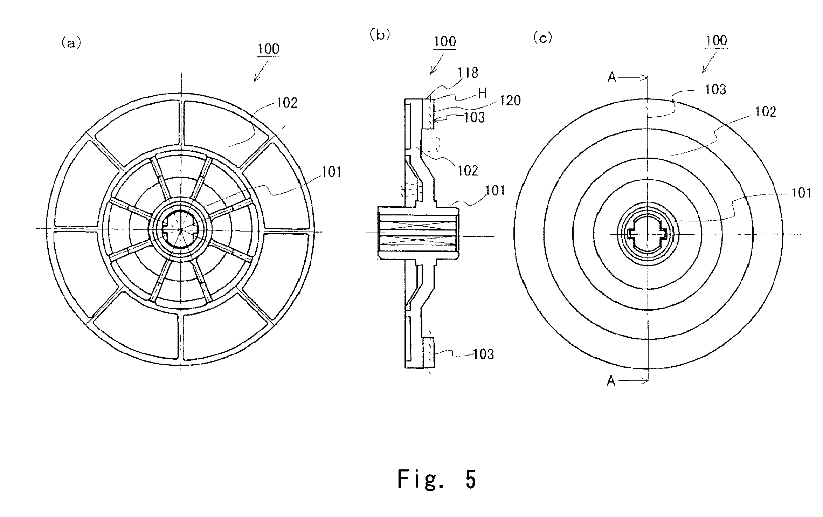

Among these resin gears, Fig. 5(a), Fig. 5(b), and Fig. 5(c) show a resin face gear. Fig. 5(a) is a rear view. Fig. 5(b) is a cross-sectional view taken along a line A-A in Fig. 5(c). Fig. 5(c) is a front view. The right-hand side of the resin face gear shown in Fig. 5(b) is the front side. The left-hand side is the rear side. The top side and the bottom side are outward radial direction sides. This also applies to Fig.1, Fig. 4, Fig. 6(a), and Fig. 7, described hereafter.

As shown in the diagrams, a resin face gear 100 includes a boss section 101, a discoid web 102, and a plurality of teeth 103. The boss section 101 is disposed in the radial center. The web 102 extends in an outward radial direction from an outer peripheral surface of the boss section 101. The plurality of teeth 103 are formed on the front side of the web 102 on the outward radial direction edge side. Each tooth 103 is formed extending in the outward radial direction from an inward radial direction. The plurality of teeth 103 are disposed along the circumferential direction of the web 102.

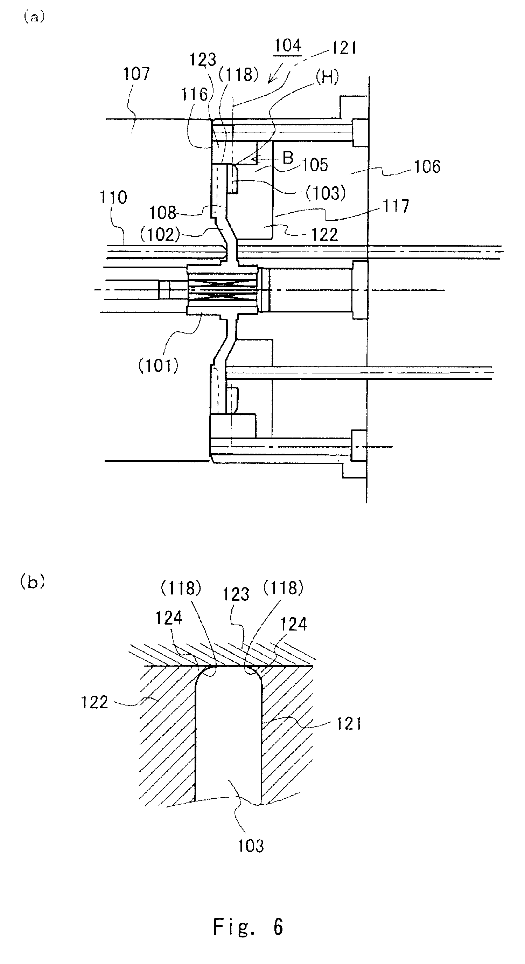

Fig. 6 shows a cross-section of a mold 104 used when the above-described resin face gear 100 is formed by injection molding. The cross-section corresponds with the cross-section of the resin face gear 100 in Fig. 5(b). As shown in Fig. 6(a), the mold 104 includes a cavity block 105 and a core block 106 that serve as the moveable half of the mold. The mold 104 includes a cavity block 107 that serves as the fixed half of the mold. A cavity 108 is formed in a butt section between the movable half and the fixed half. In a position in the cavity block 105 corresponding with the inner circumference side of the web 102 (see Fig. 5), a gate 110 is disposed in each position evenly dividing (for example, into eight equal parts) the web 102 in the circumferential direction. During injection molding, molten resin is injected from the gates 110 into the cavity 108. The molten resin gradually flows into the inner boss section 101 side and the outer circumference side of the outer web 102. The molten resin flows into the teeth 103 and fills the cavity 108.

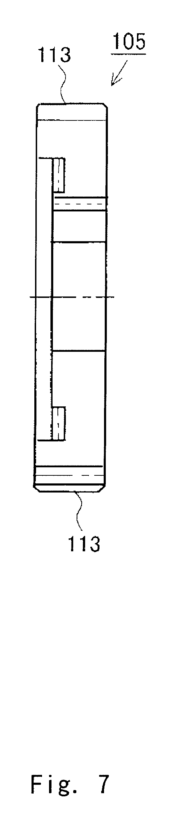

Fig. 7 is a diagram of the cavity block 105 within the above-described mold 104 that forms the teeth 103. Fig. 7 corresponds with Fig. 6(a). A circumferential direction gas-releasing groove (not shown) is formed on the front side of the cavity block 105 (the surface on the right-hand side in Fig. 7). A radial direction gas-releasing groove (not shown) communicating with the circumferential direction gas-releasing groove is also formed. An axial direction gas-releasing groove 113 is formed on the outer peripheral surface of the cavity block 105, in a position corresponding to the above-described radial direction gas-releasing groove. The axial direction gas-releasing groove (not shown) is also formed in the inner peripheral surface of the cavity block 105. At the same time, the circumferential direction gas-releasing groove (not shown), the radial direction gas-releasing groove (not shown), and the like are formed on the rear side (the surface on the left-hand side in Fig. 7). During injection molding, gas within the cavity 108 (refers to air remaining within the cavity 108, moisture included within molding materials, and other volatile components [gaseous matter]; the same applies hereafter) is compressed as a result of the molten resin gradually filling the inside of the cavity 108, shown in Fig. 6(a). The compressed gas passes through a parting line 116, a parting line 117, and the like, in which the gas-releasing grooves are formed, and is released outside.

The gas within the cavity 108 tends to accumulate in the last section within the cavity 108, configured as described above, to be filled with the molten resin. In other words, the gas tends to accumulate in a section on the outward radial direction side edge 118 (see Fig. 5(b)) of the teeth 103 in the resin face gear 100 corresponding with a tooth crest 120 (a tooth crest edge H). The outward radial direction side edge 118 is a section at which the tooth crest, tooth flanks on both sides, and a bottom land of the teeth 103 intersect with the outward radial direction side edge surface (the outer peripheral surface) of the teeth 103.

When the gas within the cavity 108 is not smoothly discharged, the gas remaining near the tooth crest edge H causes short shot. Alternatively, the remaining gas may become compressed and hot, burning the resin filling the cavity 108. A burn or a black streak occurs, causing poor appearance and leading to a decline in quality.

As a technology for resolving burns, black streaks, and short shots, such as those described above (referred to, hereinafter, as "poor appearance"), Patent Literature 1 discloses a following technology. A parting line (PL) is positioned farthest from a gate. The gas within the cavity during injection molding is smoothly discharged outside of the cavity, via a gas-releasing groove in the parting line.

In the resin face gear 100, the outward radial direction side edge 118 of the teeth 103 positioned farthest from the gate 110 is the first section to come into contact with a mating gear. This area is important in terms of strength and noise prevention. Therefore, a chamfered curved section that is a curved surface is provided on the outward radial direction side edge 118. As a result, concentration of stress can be prevented, contact with the mating gear can be made smoothly, and noise can be reduced.

However, in the technology of the Patent Literature 1, when a curved section such as this is provided on the outward radial direction side edge 118 of the teeth 103, it is difficult to provide the parting line in the curved section for the following reason, and poor appearance cannot be completely prevented.

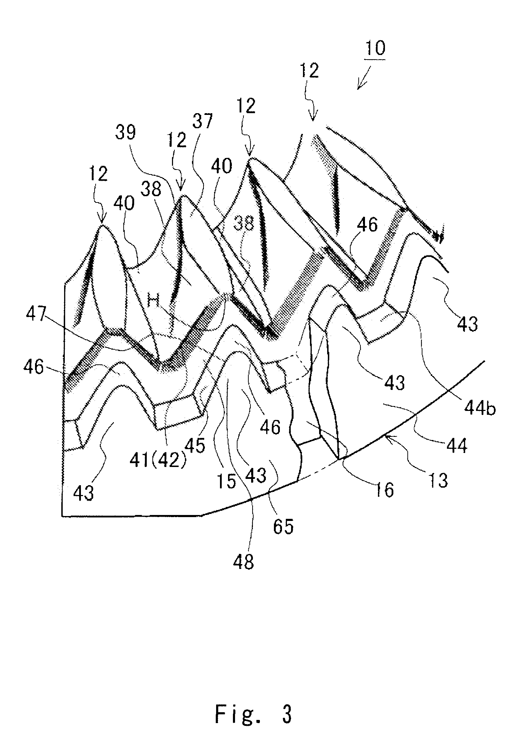

For example, as shown in Fig. 6(a), a parting line 121 of the mold is provided intersecting with the outward radial direction side edge 118 of the teeth 103. In this case, the cavity block 105 is divided into a ring-shaped cavity block 123 and a cavity block 122, with the parting line 121 as a border therebetween. The cavity block 123 forms a portion of the outer peripheral surface of the teeth 103 and the outer peripheral surface of the web 102. The cavity block 122 forms a large section of the teeth 103 and the front side of the web 102. Fig. 6(b) is an enlarged view of the parting line 121 viewed from an arrow B direction in Fig. 6(a). As shown in the diagram, in the parting line 121, the cavity block 123 forms the outer peripheral surface of the teeth 103. The cavity block 122 forms the other areas of the teeth 103. In this case, the cavity block 122 forms the curved section of the outward radial direction side edge 118 of the teeth 103. A section corresponding with the outward radial direction side edge 118 becomes a tapered-form 124. The tapered-form 124 is formed in most sections of the angled forms along the outward radial direction side edge 41, described hereafter with reference to Fig. 3, excluding the section corresponding to an area on the tooth crest side of the parting line 121.

Patent Literature 1: Japanese Patent Laid-open Publication No. 2002-103385

### SUMMARY OF THE INVENTION

However, in effect, it is almost impossible to form the tapered-form 124, such as that described above, in the cavity block 122, due to manufacturing issues and problems related to the strength of the mold. In other words, it is substantially difficult to provide the parting line 121 that intersects with the curved section of the outward radial direction side edge 118. The gas within the cavity 108 cannot be discharged via the parting line 121, such as this, in the mold.

Therefore, an object of the present invention is to provide a resin face gear and an injection-molding mold for the resin face gear. In the resin face gear, a parting line of a mold can be disposed near an outward radial direction side edge of teeth, even when a curved section is provided in the outward radial direction side edge. Poor appearances that tend to occur near a tooth crest edge are prevented from occurring.

The invention according to claim 1 is related to a resin face gear. In the resin face gear, a plurality of teeth extending in an outward radial direction from an inward radial direction are formed along a circumferential direction on one side surface of a web. The resin face gear of the invention is formed by injection molding. The resin face gear includes a projecting section that projects from an outward radial direction side edge surface to increase a radial direction dimension of the outward radial direction side edge surface. The projecting section includes a teeth corresponding section formed on the outward radial direction side edge surface of the teeth.

The invention according to claim 2 is the resin face gear according to claim 1, in which a curved section is formed in an intersecting section between a tooth crest of the teeth and the outward radial direction side edge surface of the teeth, an intersecting section between a tooth flank on one side of the teeth and the outward radial direction side edge surface of the teeth, and an intersecting section between a tooth flank on the other side of the teeth and the outward radial direction side edge surface of the teeth to smoothly connect intersecting surfaces in each intersecting section.

The invention according to claim 3 is the resin face gear according to claim 2, in which a curved section is formed in an intersecting section between the outward radial direction side edge surface of the teeth and a bottom land of the teeth to smoothly connect intersecting surfaces.

The invention according to claim 4 is the resin face gear according to any one of claims 1 to 3, in which the teeth corresponding section is formed having a roughly-angled form imitating a tooth form of the teeth and includes an edge line section.

The invention according to claim 5 is the resin face gear according to claim 4, wherein the edge line section is disposed in a position separated by predetermined lengths from the tooth crest of the teeth, the tooth flank on one side of the teeth, the tooth flank on the other side of the teeth, and the bottom land of the teeth.

The invention according to claim 6 is the resin face gear according to any one of claims 1 to 5, in which the projecting section is formed on the outward radial direction side edge surface of the web and forms a web corresponding section.

The invention according to claim 7 is the resin face gear according to claim 5 or 6, in which the edge line section has a peak. A length from the tooth crest to the peak is longer than a length from a connection position between the curved section and the outward radial direction side edge surface of the teeth to the tooth crest of the teeth. The curved section is formed on the intersecting section between the tooth crest of the teeth and the outward radial direction side edge surface of the teeth.

The invention according to claim 8 is the resin face gear according to any one of claims 5 to 7, in which the predetermined lengths from the tooth crest of the teeth, the tooth flank on one side of the teeth, the tooth flank on the other side of the teeth, and the bottom land of the teeth to the edge line section are equal.

The invention according to claim 9 is related to an injection-molding mold for a resin face gear. A plurality of teeth extending in an outward radial direction from an inward radial direction are formed along a circumferential direction of a web on one surface side of the web on an outward radial direction edge side. The injection-molding mold for a resin face gear of the invention includes a first mold and a second mold. The first mold and the second mold form the resin face gear by molten resin being poured into a cavity formed in a butt section between the first mold and the second mold. The first mold includes a projecting section forming section that forms a projection section that projects from an outward radial direction side edge surface of the resin face gear to increase a radial direction dimension of the outward radial direction side edge surface. A butt surface between the first mold and the second mold includes a third mold and a fourth mold serving as a parting line that can discharge gas within the cavity during injection molding. The butt surface is disposed in a position in which the parting line passes through the projecting section forming section.

The invention according to claim 10 is related to an injection-molding mold for a resin face gear. The resin face gear includes a web and a plurality of teeth. The injection-molding mold for a resin face gear of the invention includes a first mold and a second mold. The first mold includes a first cavity forming section that forms the cavity. The second mold includes a second cavity forming section that forms a cavity. The first cavity forming section and the second cavity forming section form the cavity by the first mold and the second mold being butted together. The resin face gear is formed by molten resin being poured into the cavity. The first mold includes a curved section forming section and a projection section forming section. The curved surface forming section forms a curved surface having a smoothly curved surface in an intersecting section between a tooth crest of the teeth in the resin face gear and an outward radial direction side edge surface, an intersecting section between tooth flanks on both sides of the teeth and the outward radial direction side edge surface of the teeth, and an intersecting section between the bottom land of the teeth and the outward radial direction side edge surface of the teeth on the respective outward radial direction side edge surfaces of the teeth. The projecting section forming section forms a projecting section that projects from the outward radial direction side edge surface of the teeth and an outward radial direction side edge surface of the web to increase radial direction dimensions of the outward radial direction side edge surface of the teeth and the outward radial direction side edge surface of the web. The projecting section forming section is formed so that a teeth corresponding section that corresponds with the outward radial direction side edge surface of the teeth, within the projecting section, is formed having a roughly-angled form imitating a tooth form of the teeth. In addition, an edge line section of the teeth corresponding section is disposed in a position that is respectively separated by predetermined lengths from the tooth crest of the teeth, the tooth flanks on both sides of the teeth, and the bottom land of the teeth. A predetermined length from the tooth crest of the teeth to a peak in the edge line section of the teeth corresponding section is longer than a length from a connection position between the curved section forming section and the outward radial direction side edge surface forming section to the tooth crest. The first mold includes a third mold and a fourth mold. A butt surface between the third mold and the fourth mold forms a parting line that can discharge gas within the cavity during injection molding. The butt surface is disposed in a position at which the parting line comes into contact with the teeth corresponding section in the projecting section.

The invention according to claim 11 is the injection-molding mold for a resin face gear according to claim 9 or 10, in which the parting line formed by the third mold and the fourth mold passes through a peak in the edge line section.

The invention according to claim 12 is the injection-molding mold for a resin face gear according to any one of claims 9 to 11, in which the third mold includes a teeth forming section that forms the teeth and an edge line section forming section. The fourth mold includes a cylindrical outer peripheral surface forming section that forms an outward radial direction side edge surface of the teeth corresponding section and an outward radial direction side edge surface of a web corresponding section corresponding to the web within the projecting section.

The invention according to claim 13 is the injection-molding mold for a resin face gear according to any one of claims 9 to 12, in which the cavity includes a gate used to inject the molten resin. The gate is disposed closer to the center of the cavity than the teeth forming section in the cavity.

### EFFECT OF THE INVENTION

In the invention according to claim 1, the resin face gear is formed by injection molding. The resin face gear includes the projecting section that projects from the outward radial direction side edge surface to increase the radial direction dimension. The projecting section includes the teeth corresponding section formed on the outward radial direction side edge surface of the teeth. As a result, the gas that tends to accumulate near the outward radial direction side edge surface of the teeth and particularly near the tooth crest during injection molding can be driven to the projecting section side.

In the invention according to claim 2, the curved section is formed in the intersecting section between the tooth crest of the teeth and the outward radial direction side edge surface of the teeth, the intersecting section between the tooth flank on one side of the teeth and the outward radial direction side edge surface of the teeth, and the intersecting section between the tooth flank on the other side of the teeth and the outward radial direction side edge surface of the teeth. As a result, concentration of stress in the intersecting sections can be prevented, and noise can be reduced because contact between the teeth and the teeth on a mating gear is made smoothly.

In the invention according to claim 3, the curved section is formed in the intersecting section between the outward radial direction side edge surface of the teeth and the bottom land of the teeth. As a result, the concentration of stress in the intersecting section can be prevented.

In the invention according to claim 4, the teeth corresponding section is formed having a roughly-angled form imitating the tooth form of the teeth and includes the edge line section. As a result, the edge line section can be disposed near the tooth crest, the tooth flank on one side, the tooth flank on the other side, and the bottom land of the teeth.

In the invention according to claim 5, the edge line section is disposed in the position separated by predetermined lengths from the tooth crest of the teeth, the tooth flank on one side of the teeth, the tooth flank on the other side of the teeth, and the bottom land of the teeth. As a result, by the predetermined length being adjusted accordingly, for example, the gas that tends to accumulate near the tooth crest during injection molding can be smoothly discharged, via the edge line. The term "predetermined length" is used in reference to each length from the edge line section to the tooth crest, from the edge line section to the tooth flank on one side, from the edge line section to the tooth flank on the other side, and from the edge line section to the bottom land. However, the predetermined lengths are not necessarily required to be the same.

In the invention according to claim 6, the projecting section is formed on the outward radial direction side edge surface of the web and forms the web corresponding section. As a result, the compressed gas that is, for example, accumulated near the tooth crest during injection molding can be discharged to the outside, via the web corresponding section.

In the invention according to claim 7, the length from the tooth crest to the peak of the teeth corresponding section is longer than the length from the connection position between the curved section and the outward radial direction side edge surface of the teeth to the tooth crest of the teeth. As a result, the peak can be configured to not overlap with the curved section. Compared to when the peak overlaps with the curved section, the shape can be simplified.

In the invention according to claim 8, the predetermined lengths from the tooth crest of the teeth, the tooth flank on one side of the teeth, the tooth flank on the other side of the teeth, and the bottom land of the teeth to the edge line section are equal. As a result, when the predetermined lengths are set to a required minimum, for example, the angled form of the teeth corresponding section can be made closer to the tooth form. The compressed gas that tends to accumulate during injection molding can be more smoothly discharged, via the teeth corresponding section.

In the invention according to claim 9, the injection-molding mold forms the resin face gear by molten resin being poured into the cavity formed in the butt section between the first mold and the second mold. The first mold includes the projecting section forming section, the third mold, and the fourth mold. Parting lines of the molds are disposed in positions passing through the projecting section forming section. As a result, the compressed gas that tends to accumulate during injection molding is discharged outside, via the parting lines. Therefore, poor appearances, such as burns, black streaks, and short shots do not occur near the tooth crest.

In the invention according to claim 10, the teeth corresponding section can be disposed near the tooth crest. The parting line that is the butt surface between the third mold and the fourth mold is disposed in the position contacting the teeth corresponding section. As a result, the parting line can be disposed near the tooth crest. Therefore, the gas that tends to accumulate near the tooth crest can be smoothly discharged, via the parting line.

In the invention according to claim 11, the parting line formed by the third mold and the fourth mold passes through the peak in the edge line section, or in other words, the section in the edge line section closest to the tooth crest. As a result, the gas near the tooth crest can be quickly discharged outside.

In the invention according to claim 12, the teeth forming section and the edge line forming section are formed in the third mold. As a result, the outer peripheral surface forming section forming the outward radial direction side edge surface (outer peripheral surface) of the teeth corresponding section and of the web corresponding section, within the fourth mold, can have a simple cylindrical shape.

In the invention according to claim 13, the gate is disposed closer to the center of the cavity than the teeth forming section in the cavity. Therefore, the molten resin injected from the gate moves from the inward radial direction side within the cavity toward the outward radial direction side edge surface. The gas within the cavity is accumulated on the outward radial direction side edge surface and is smoothly pushed out, via the parting line.

### BRIEF DESCRIPTION OF THE DRAWINGS

FIG. 1(a) is a rear view of a resin face gear of the present invention;
Fig. 1(b) is a cross-sectional diagram of the resin face gear taken along a line A-A in Fig. 1(c);
Fig. 1(c) is a front view of the resin face gear;
Fig. 2 is an enlarged view of a vicinity of teeth in the resin face gear shown in Fig. 1 (b);
Fig. 3 is an enlarged perspective view of the teeth and a projecting section from the resin face gear;
Fig. 4 is a cross-sectional diagram of a mold used during injection-molding of the resin face gear, including an axis;
Fig. 5(a) is a rear view of a conventional resin face gear;
Fig. 5(b) is a cross-sectional diagram of the conventional resin face gear taken along a line A-A in Fig. 5(c);
Fig. 5(c) is a front view of the conventional resin face gear;
Fig. 6(a) is a cross-sectional diagram of a mold used during injection-molding of the resin face gear, including an axis;
Fig. 6(b) is a diagram explaining the difficulty of providing a parting line that intersects a curved surface formed on an outward radial direction side edge surface of the teeth;
Fig. 7 is a diagram explaining a gas-releasing groove formed on a cavity block; and
Fig. 8 is an enlarged longitudinal sectional view of a configuration of a projecting section forming section of a mold according to a second embodiment.

### EXPLANATION OF THE REFERENCE NUMERALS

### DETAILED DESCRIPTION OF THE PREFERRED EMBODIMENT

Embodiments of the present invention will be described in detail, with reference to the drawings.

### <First Embodiment>

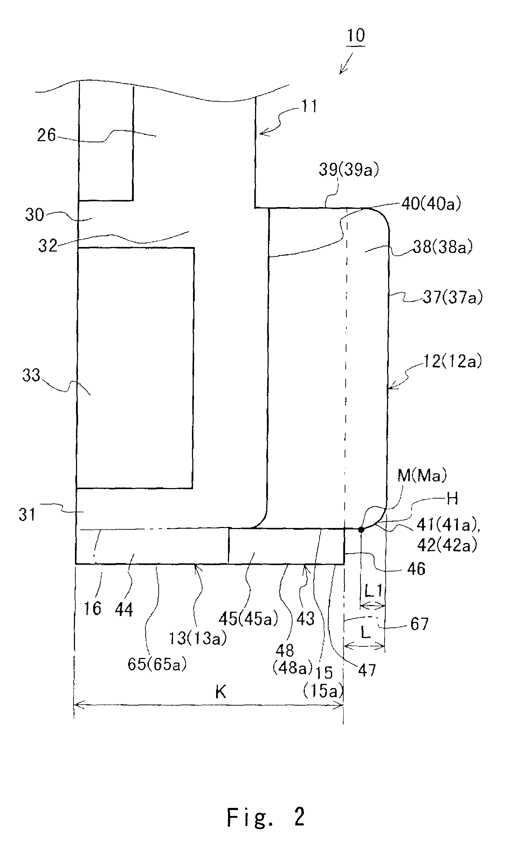

Fig. 1, Fig. 2, and Fig. 3 are diagrams of a resin face gear 10 according to an embodiment of the invention. FIG. 1(a) is a rear view of the resin face gear 10 (a diagram of a view from a side surface side of a web 11 having teeth 12). Fig. 1 (b) is a cross-sectional diagram of the resin face gear 10 taken along a line A-A in Fig. 1(c). Fig. 1(c) is a front view of the resin face gear 10. Fig. 2 is an enlarged view of a vicinity of the teeth 12 indicated by a two-dot chain line P in Fig. 1 (b). Fig. 3 is an enlarged perspective view of the teeth 12 and a projecting section 13 from the resin face gear 10;

The resin face gear 10 is formed from resin material, such as thermoplastic resin material. The thermoplastic resin material is, for example, polyacetal, polyamide, polyphenylene sulfide, and polybutylene terephthalate.

As shown in Fig. 1 (a) to 1 (c), the resin face gear 10 includes a roughly discoid web 11, a plurality of teeth 12, and a projecting section 13. The teeth 12 are formed on a front surface 14 (one side surface) on an outward radial direction edge side of the web 11. The projecting section 13, shown in Fig. 2, is formed projecting from an outward radial direction side edge surface 15 (referred to, hereinafter, as an "outer peripheral surface") of the teeth 12 and an outward radial direction side edge surface 16 (referred to, hereinafter, as an "outer peripheral surface") of the web 11. The outer peripheral surface 15 and the outer peripheral surface 16 are actually covered by the projecting section 13 and are not outwardly apparent. Even when the outer peripheral surface 15 and the outer peripheral surface 16 appear, the outer peripheral surface 15 and the outer peripheral surface 16 are only slightly visible. However, for simplicity, the outer peripheral surface 15 is a surface of the teeth 12 bordering with the projecting section 13. Similarly, the outer peripheral surface 16 is a surface of the web 11 bordering with the projecting section 13.

As shown in Fig. 1(a) to Fig. 1(c), a roughly cylindrical boss section 17 is disposed in the radial center of the web 11 in the resin face gear 10.

The boss section 17 has an axis hole 18 that passes through the radial center of the boss section 17 in an axial direction. A pair of engaging surfaces 20 and 21 is provided on an inner surface of the axis hole 18. The engaging surface 20 and the engaging surface 21 face each other in parallel. A groove 22 and a groove 23 are respectively formed on the engaging surface 20 and the engaging surface 21, along the axial direction. The engaging surface 20 and the engaging surface 21 are engaged to an engaged portion (not shown) formed on the axis (not shown). As a result, the boss section 17 integrally rotates with the rotation of the axis.

The web 11 is formed so that an inner circumference section 24 that serves as a base end side (a side closer to the boss section 17) extends straight in the outward radial direction from an almost axial center of the outer peripheral surface of the boss section 17. A middle section 25 extends in the outward radial direction, bending to a rear surface side. An outer circumference section 26 that serves as a tip side (a side farther from the boss section 17) extends in the outward radial direction. In a rear surface (the other side surface) 27 of the web 11, a circumferential direction rib 28, a circumferential direction rib 30, and a circumferential direction rib 31 are respectively formed so as to protrude from the inner side, the middle, and the outer side of the outer circumference section 26. A stepped section 32 is provided in the outer circumference section 26, near the circumferential direction rib 30 in the middle, among the inner side, the middle, and the outer side of the outer circumference section 26. The outer circumference side is shifted closer to the front surface side than the inner circumference side, with the stepped section 32 as a border. As a result, a ring-shaped concave section 33 with a relatively large depth dimension is formed between the circumferential direction rib 30 and the circumferential direction rib 31. The thickness of the outer circumference 26 in the section positioned on the outer side of the stepped section 32 is thin. Therefore, for example, when the resin face gear 10 is formed by injection molding, generally, a gate 62 (shown by a dotted line in Fig. 1(b)) serving as an injection opening for the molten resin is disposed in a position corresponding to the inner circumference section 24 and the boss section 17 in web 11. However, in this case, the molten resin flowing to the teeth 12 after passing the stepped section 32 from the web 11 can smoothly flow into each tooth 12 after the flow is temporarily narrowed by the stepped section 32. The thickness of a section within the outer circumference section 26 that is positioned closer to the outer circumference side than the stepped section 32 is formed thinner than the section of the outer circumference section 26 on the inner circumference side, the middle section 25, and the inner circumference section 24. As a result, the web 11 can be prevented from bending during injection molding. Within the outer circumference section 26 of the web 11, a section corresponding to the outer side of the stepped section 32, and a section positioned on the outer side of the circumferential direction rib 30 and the inner side of the circumferential direction rib 31 can be considered ribs formed to be continuous with the web.

In a position on the rear surface 27 of the web 11 corresponding to the inner circumference section 24 and the middle section 25, between the outer peripheral surface of the boss section 17 and the above-described inner circumferential direction rib 28, radial direction ribs 34 are respectively provided so as to protrude from positions evenly dividing (into eight equal parts, according to the embodiment) this section in the circumferential direction. Between the inner circumferential direction rib 28 in the rear surface side of the outer circumference section 26 and the middle circumferential direction rib 30, radial direction ribs 35 are respectively provided so as to protrude from positions corresponding to positions between adjacent radial direction ribs 34, among the radial direction ribs 34.

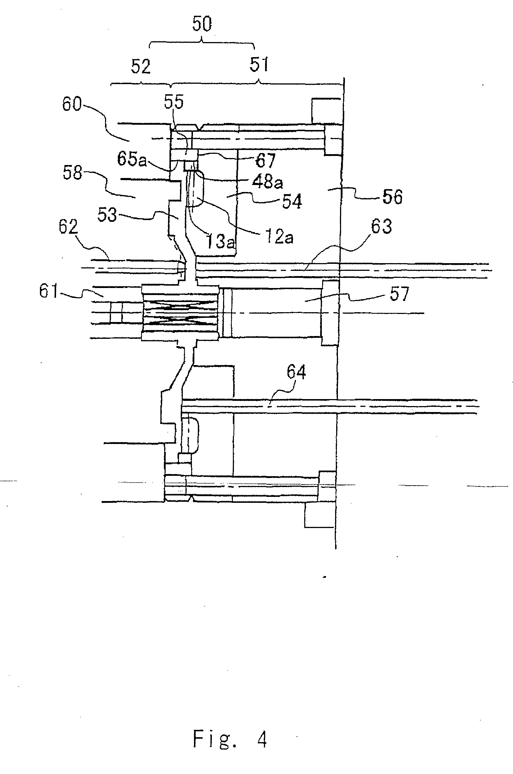

The teeth 12 are formed on one side surface of the web 11 on the outward radial direction edge side, or in other words, the front surface side on the outer side of the outer circumference section 26 of the web 11. Each tooth 12 is formed extending outward from the inner radial direction. The plurality of teeth 12 are formed along the circumferential direction of the web 11 at a predetermined pitch. According to the embodiment, as shown in Fig. 1 (a), each tooth 12 is formed so that a flank line 36 is formed slanted at a predetermined angle to the radial direction. As shown in Fig. 2 and Fig. 3, each tooth 12 includes a tooth crest 37, tooth flanks 38 on both sides, a bottom land 40, an inner peripheral surface (inward radial direction side edge surface) 39, and an outer peripheral surface (outward radial direction side edge surface) 15. A chamfered curved section 42 having a smooth curved surface is formed on an outer radial direction side edge 41 of the teeth 12 that is an intersecting section of the tooth crest 37, the tooth flanks 38 on both sides, the bottom land 40, and the outer peripheral surface 15. The curved section 42 is formed having a roughly-angled form imitating a tooth form of the teeth 12 when viewed from the outward radial side. In this way, when the curved section 42 is provided on the outward radial direction side edge 41 of the teeth 12, concentration of stress when the teeth 12 meshes with a mating gear (not shown) can be prevented, strength can be enhanced, and noise during meshing can be reduced. As shown in Fig. 2 and Fig. 3, the outer peripheral surface 15 of each tooth 12 and the outer peripheral surface 16 of the web 11 are disposed on a cylindrical outer peripheral surface of which the axis of the boss section 17, shown in Fig. 1, is the center. In the description below, a section of the outward radial direction side edge 41 corresponding with the tooth crest 37, in particular, is a tooth crest edge H. As described hereafter, the tooth crest edge H is a section in which gas within a cavity 53 (see Fig. 4) particularly tends to accumulate when, for example, the resin face gear 10 is formed by injection molding.

The overall projecting section 13 is a thin, cylindrical section that projects from the outer peripheral surface 15 of the teeth 12 and the outer peripheral surface 16 of the web 11 to increase the radial direction dimensions of the outer peripheral surface 15 and the outer peripheral surface 16. The projecting section 13 includes a teeth corresponding section 43 and a web corresponding section 44, as shown in Fig. 2 and Fig. 3. The teeth corresponding section 43 corresponds to the outer peripheral surface 15 of the teeth 12. The web corresponding section 44 corresponds to the outer peripheral surface 16 of the web 11. Among these, the teeth corresponding section 43 is formed in almost the same shape as the outer peripheral surface 15 of the teeth 12. In other words, when the section of the teeth corresponding section 43 having a width corresponding to the thickness of the projecting section 13 (a side surface) is an edge line section 45, the edge line section 45 is disposed in a position separated from the tooth crest 37, the tooth flanks 38 on both sides, and the bottom land 40 of the teeth 12 by a predetermined length L. When described with reference to Fig. 2, with a section closest to the tooth crest 37 serving as a peak 46, the predetermined length L is a distance from the tooth crest 37 to the peak 46. The predetermined length L is set to a length equal to a length L1 from a connection position M between the curved section 42 and the outer peripheral surface 15 of the teeth 12 to the tooth crest 37. Alternatively, the predetermined length L is set to a length slightly longer than the length L1 from the connection position M to the teeth crest 37. In this case, "equal" is when L=L1, indicating that the teeth corresponding section 43 of the projecting section 13 is the same as the area in the outer peripheral surface 15 of the teeth 12 excluding the curved section 42. In this case, "equal" is when L=L1. The teeth corresponding section 43 of the projecting section 13 is the same as the section of the outer peripheral surface 15 of the teeth 12 excluding the curved section 42. In this case, the edge line section 45 of the teeth corresponding section 43 is closest to the outward radial direction side edge 41 of the teeth 12. As described hereafter, L=L1 is preferable in terms of effectively discharging the gas that tends to accumulate in the teeth crest edge H during injection molding. However, in actuality, there is the effect of a weld flash caused by injection molding. Therefore, L is most preferably slightly longer than L1. According to the embodiment, the peak 46 is formed having a gently curved surface.

In the description above, the edge line section 45 is disposed in a position separated by the predetermined lengths L from the tooth crest 37, the tooth flanks 38 on both sides, and the bottom land 40 of the teeth 12. However, the invention is not limited thereto. Within the predetermined lengths L, when the length from the tooth crest 37 of the teeth 12 to the edge line section 45 is the predetermined length L1, the length from one tooth flank 38 of the teeth 12 to the edge line section 45 is a predetermined length L2, the length from the other tooth flank 38 of the teeth 12 to the edge line section 45 is a predetermined length L3, and the length from the bottom land 40 of the teeth 12 to the edge line section 45 is a predetermined length L4, the invention includes when L1 to L4 all differ and when arbitrary two or three lengths among the L1 to L4 are the same.

As shown in Fig. 3, the web corresponding section 44 within the projecting section 13 is formed in a thin cylinder. In an end section 44b (an upper edge section in Fig. 3) near the teeth 12 in the web corresponding section 44, a large number of teeth corresponding sections 43 are disposed at a predetermined pitch that is the same as the pitch of the teeth 12. In the outward radial direction side edge 47 of the teeth corresponding section 43 in the projecting section 13, or other words, a section at which the edge line section 45 and an outer peripheral surface 48 of the projecting section 13 intersect, the edges are sharp unlike when the outward radial direction side edge 41 of the teeth 12 is formed into the chamfered curved surface. As a result, as described hereafter, the parting line 67 of the injection molding mold 50 used for injection molding can be provided to intersect with the teeth corresponding section 43.

The projecting section 13 is the outer peripheral surface 15 of the teeth and the outer peripheral surface 16 of the web 11 protruding in the outward radial direction. Therefore, the thickness of the resin face gear 10 after molding is preferably thin. However, as described hereafter, in terms of the strength of the injection molding mold 50, an appropriate thickness is required to be maintained.

The effect of the resin face gear 10 configured as described above will be described later, in addition to the effect of the injection molding mold 50 of the resin face gear 10.

The injection molding mold (referred to, hereinafter, as simply a "mold") 50 used when the resin face gear 10 is formed by injection molding will be described, with reference to Fig. 4.

Each section of the mold 50 is named having a phrase "forming section" added to each name in the resin face gear 10. For example, the section on the mold 50 forming the "teeth" in the resin face gear 10 is called a "teeth forming section". The reference numbers are expressed with an "a" added after the reference number of each section in the resin face gear 10. For example, regarding the "teeth 12", the reference number is a "teeth forming section 12a". Shapes and relative positional relationships of each section of the mold 50 are the same as the shape and the relative positional relationships of each section in the resin face gear 10 formed by injection molding using the mold 50, other than that concave and convex relationship of the shapes are reversed. Therefore, the shapes and the relative positional relationships of each section of the resin face gear 10 can be used accordingly, instead.

As shown in Fig. 4, the mold 50 includes a movable mold 51 (a first mold) and a fixed mold 52 (a second mold). A cavity 53 used to form the resin face gear 10 by the molten resin being poured within is formed in the butt section between the mold 51 and the mold 52.

The movable mold 51 includes a cavity block 54 (a third mold), a cavity block 55 (a fourth mold), a core block 56, and the like. In the radial center of the core block 56, a center pin 57 is inserted and attached in the axial direction. At the same time, the fixed mold 52 includes a cavity block 58, a cavity block 60, and the like. In the radial center of the inner cavity block 58, a bushing pin 61 is inserted and attached in the axial direction.

The cavity block 58 and the cavity block 60 on the fixed side mainly form the shape of the rear surface side of the resin face gear 10 (see Fig.1 (a)), or in other words, a rear surface side section of the boss section 17, the rear surface 27 of the web 11, the circumferential direction rib 28, the circumferential direction rib 30, the circumferential direction rib 31, the radial direction rib 34, the radial direction rib 35, the ring-shaped concave section 33, and the like. In the inner cavity block 58, gates 62 (only one gate 62 is shown in Fig. 4) for pouring the molten resin into the cavity 53 are formed along the axial direction in a position corresponding to the rear surface side of the inner circumference section 24 of the web 11 in the resin face gear 10 and in the positions evenly dividing (into four equal parts according to the embodiment) in the inner circumference section 24.

The movable core block 56, the cavity block 54, and the cavity block 55 mainly form the shape of the front surface side and the outward radial direction side edge surface of the resin face gear 10. The core block 56 forms the front surface side section of the boss section 17 and the front surface side of the inner circumference section 24 of the web 11. Pin holes 63 are formed along the axial direction in the position in the core block 56 corresponding with the inner circumference section 24 of the web 11. Ejector pins (not shown) are inserted into the pin holes 63 in positions evenly dividing (into two equal parts according to the embodiment) the inner circumference section 24 in the circumferential direction. Pin holes 64 are formed along the axial direction in the position in the core block 56 corresponding with the outer circumference section 26 of the web 11. Ejector pins (not shown) are inserted into the pin holes 64 in positions evenly dividing (into 10 equal parts according to the embodiment) the outer circumference section 26 in the circumferential direction. The cavity block 54 includes a section for forming the front surface sides of the middle section 25 and the outer circumference section 26 of the web 11, the teeth forming section 12a forming the teeth 12 as shown in Fig. 2, and an edge line section forming section 45a forming the edge line 45 of the teeth corresponding section 43 within the projecting section 13. Here, the teeth forming section 12a includes sections forming the tooth crest 37, the tooth flanks 38 on both sides, the bottom land 40, the inner circumference surface 39, the outer circumference surface 15, and the outward radial direction side edge 41 in the resin face gear 12a. In other words, the cavity block 54 includes a tooth crest forming section 37a, a tooth flanks forming section 38a on both sides, a bottom land forming section 40a, an inner circumference surface forming section 39a, an outer circumference surface forming section 15a, and an outward radial direction side edge forming section 41 a.

Here, in the projecting section forming section 13a, the edge line section 45 of the teeth corresponding section 43 of the resin face gear 10 is formed disposed in a position separated by the predetermined lengths L from the tooth crest 37, the tooth flanks 38 on both sides, and the bottom land 40 of the teeth 12. The predetermined length L is set to a length equal to a length L1 from a connection position Ma between the curved section forming section 42a and the teeth forming section 12a to the tooth crest forming section 37a. Alternatively, the predetermined length L is set to a measurement slightly longer than the length L1 from the connection position Ma to the teeth crest forming section 37a.

Furthermore, the cavity block 55 includes an outer peripheral surface forming section 48a and an outer peripheral surface forming section 65a on the inner peripheral surface. The outer peripheral surface forming section 48a forms the outer peripheral surface 48 of the teeth corresponding section 43 in the projecting section 13. The outer peripheral surface forming section 65a forms the outer peripheral surface 65 of the web corresponding section 44. The outer peripheral surface forming section 48a and the outer peripheral surface forming section 65a are formed in a simple cylindrical shape on the inner peripheral surface of the cavity block 55 as a continuous structure. According to the embodiment, the entire length of the outer peripheral surface forming section 48a and the outer circumference surface forming section 65a in the axial direction is slightly shorter than a length K of the projecting section 13 in the axial direction shown in Fig. 2. In other words, the entire length of the outer peripheral surface forming section 48a and the outer circumference surface forming section 65a is set to be slightly shorter than a length from the edge of the web corresponding section 44 (a left-hand edge section in Fig. 2) to the peak 46 of the teeth corresponding section 43. In other words, in the outer peripheral surface of the projecting section 13 formed from the outer peripheral surface 65 of the web corresponding section 44 and the outer peripheral surface 48 of the teeth corresponding section 43, the outer peripheral surface 48 of the teeth corresponding section 43 is formed concave and convex in correspondence with the tooth form. On the other hand, the outer peripheral surface forming section 65a is formed into a cylinder of which the overall length in the axial direction is constant. The outer peripheral surface forming section 48a and the outer peripheral surface forming section 65a in the cavity block 55 are formed into cylinders such as this. Therefore, the cavity block 55 is not formed between two adjacent teeth corresponding sections 43 and 43. A portion of the cavity block 54 is formed in this area. In other words, the edge line section 45 of the teeth corresponding section 43 is formed by an edge line section forming section 45a formed on the cavity block 54 side. The thickness of the edge line section forming section 45a is the same as the thickness of the projecting section 3 shown in Fig. 13. The edge line section forming section 45a has the shape of the outer peripheral surface 15 of the teeth 12 in Fig. 3 from which the teeth corresponding section 43 is removed. In other words, the edge line section forming section 45a is shaped to edge the angled edge line. Therefore, as described above, in the resin face gear 10 after molding, the thinner the thickness of the projecting section 13 is, the more preferable. Therefore, the thinner the thickness of the edge line section forming section 45a is, the more preferable. However, when the edge forming section 45a is thin, required strength cannot be ensured during manufacture and after manufacture of the cavity block 54. Therefore, the thickness of the edge line forming section 45a is set to a minimum thickness at which the required strength can be ensured. According to the embodiment, the edge line section forming section 45a is formed so that the thickness is amount 0.5 millimeters. Therefore, the thickness of the projecting section 13 is almost the same and is about 0.5 millimeters.

As described above, the edge line section 45 having a relatively complex form, within the projecting section 13, is formed by the cavity block 54. Therefore, the cavity block 55 side can have a relatively simple shape, facilitating production.

As shown in Fig. 4, the inner surface side of the cavity block 55 is formed into a cylinder. The cavity block 54 and the cavity block 55 are butted together by the parting line 67 extending in the outward radial direction. The parting line 67 is formed from the projecting section forming section 13a of the cavity 53 to outside of the mold 50. Gas-releasing grooves in the circumferential direction are formed accordingly in the parting line 67, such as those shown in Fig. 7. The gas compressed within the cavity 53 during injection molding is smoothly discharged outside, via the gas-releasing groove.

The parting line 67 according to the embodiment is set near the peak 46 of the teeth corresponding section 43 in the projecting section 13, as shown by the two-dot chain line in Fig. 2. In other words, the parting line 67 is set to pass through the vicinity of the peak 46 closest to the tooth crest edge H within the projecting section 13. When the molten resin is injected into the cavity 53 from the gate 62 shown in Fig. 4 during injection molding, the compressed gas tends to accumulate in the tooth crest edge H that is the farthest from the gate 62 and is formed like a pouch. Therefore, as described above, by the parting line 67 being disposed near the peak 46 closest to the tooth crest edge H within the projecting section 13, the gas accumulated near the tooth crest edge H can be effectively discharged near the peak 46 and, in addition, via the parting line 67. As a result, poor appearances, such as burns, black streaks, short shots, and the like, that tend to occur in the tooth crest edge H during injection molding can be prevented. From the perspective of bringing the parting line 67 closer to the tooth crest edge H, the thinner the thickness of the projecting section 13 is, the better.

In the description above, the parting line 67 passes through the position in the projecting section 13 that is closest to the tooth crest edge H, or in other words, the peak 46. However, the invention is not limited thereto. For example, the parting line 67 can intersect the teeth corresponding section 43 below the peak 46 in Fig. 3. According to the embodiment, the peak 46 is formed into a curve. Therefore, when the parting line 67 passes through the peak 46, the parting line 67 comes into point contact with the projecting section 13. However, when the parting line 67 intersects the outer peripheral surface 48 of the teeth corresponding section 43, the parting line 67 comes into almost linear contact with the projecting section 13 (strictly speaking, in an arc). In this case, the position of the parting line 67 is disadvantageous in that the distance from the tooth crest edge H becomes longer compared to when the parting line 67 passes through the peak 46. However, the length over which the parting line 67 and the outer peripheral surface 48 of the projecting section 13 are in contact becomes long. Therefore, the discharge of the compressed gas is facilitated. When the peak 46 is flat, the parting line 67 can come into linear contact with the projecting section 13 over a certain length even when passing through the peak 46.

### <Second Embodiment>

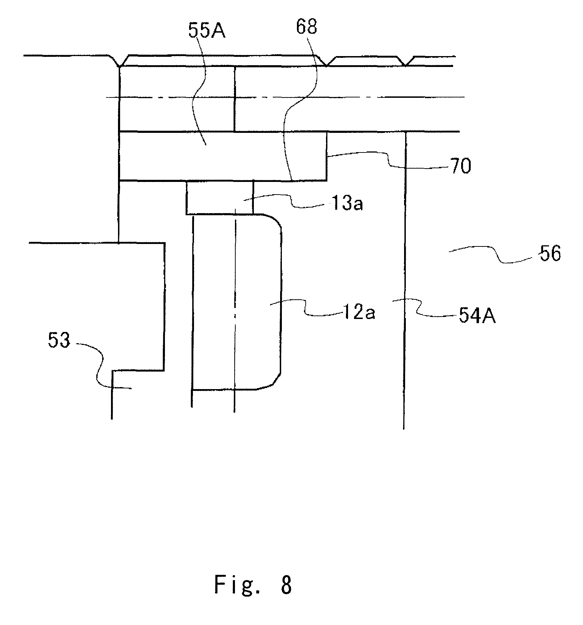

Fig. 8 is a diagram of a configuration of a mold according to a second embodiment. Fig. 8 is equivalent to an enlarged view of the vicinity of the projecting section forming section 13a in Fig. 4. According to the embodiment, a cavity block 55A is formed by the cavity block 55 in Fig. 4 being extended to the left-hand side of the diagram. According to the embodiment, a portion of the inner peripheral surface of the cavity block 55A and a portion of the outer peripheral surface of a cavity block 54A are engaged, forming a cylindrical parting line 68. One edge surface of the cavity block 55A (an edge surface in the right-hand side of Fig. 8) and a portion of the cavity block 54A are butted together, forming a contacting surface 70. According to the embodiment, the parting line 68 is positioned on an extension of the outward radial direction side edge 47 of the projecting section 13 in the resin face gear 10 shown in Fig. 2. In other words, the parting line 68 passes through the peak 46 of the projecting section 13 in the resin face gear 10. According to the embodiment, the gas-releasing groove is formed in the parting line 68 in the axial direction. The gas-releasing groove is formed in the contacting surface 70 in the radial direction. Both gas-releasing grooves are in communication. Therefore, the compressed gas within the cavity 53 during injection molding is smoothly discharged outside, via the gas-releasing grooves. According to the embodiment, the cavity block 54A is engaged to the cavity block 55A by the parting line 68. Therefore, the positions of the cavity block 54A and the cavity block 55A in the radial direction can be set. As a result, compared to the above-described first embodiment, a configuration for positioning is not required to be provided separately. The configuration of the mold can be simplified.

In the description above, an example is described in which the invention is applied to a resin face gear and a mold used when the resin face gear is formed by injection molding. However, the invention is not limited thereto. The invention can be applied to a resin spur gear, a resin helical gear, and molds used when the resin spur gear and the resin helical gear are formed by injection molding.

### Industrial Applicability

The resin face gear of the invention can be widely applied to automobiles, office automation (OA) equipment, in means and devices for rotation transmission of power.

## Claims

1. A resin face gear in which a plurality of teeth extending in an outward radial direction from an inward radial direction are formed along a circumferential direction on one side surface of a web, the resin face gear wherein:
the resin face gear is formed by injection molding;
a projecting section that projects from an outward radial direction side edge surface to increase a radial direction dimension of the outward radial direction side edge surface is included; and
the projecting section includes a teeth corresponding section formed on the outward radial direction side edge surface of the teeth.

2. The resin face gear according to claim 1, wherein:
a curved section is formed in an intersecting section between a tooth crest of the teeth and the outward radial direction side edge surface of the teeth, an intersecting section between a tooth flank on one side of the teeth and the outward radial direction side edge surface of the teeth, and an intersecting section between a tooth flank on the other side of the teeth and the outward radial direction side edge surface of the teeth to smoothly connect intersecting surfaces in each intersecting section.

3. The resin face gear according to claim 2, wherein:
a curved section is formed in an intersecting section between the outward radial direction side edge surface of the teeth and a bottom land of the teeth to smoothly connect intersecting surfaces.

4. The resin face gear according to any one of claims 1 to 3, wherein:
the teeth corresponding section is formed having a roughly-angled form imitating a tooth form of the teeth and includes an edge line section.

5. The resin face gear according to claim 4, wherein:
the edge line section is disposed in a position separated by predetermined lengths from the tooth crest of the teeth, the tooth flank on one side of the teeth, the tooth flank on the other side of the teeth, and the bottom land of the teeth.

6. The resin face gear according to any one of claims 1 to 5, wherein:
the projecting section is formed on the outward radial direction side edge surface of the web and forms a web corresponding section.

7. The resin face gear according to claim 5 or 6, wherein:
the edge line section has a peak; and
a length from the tooth crest to the peak is longer than a length from a connection position between the curved section, formed on the intersecting section between the tooth crest of the teeth and the outward radial direction side edge surface of the teeth, and the outward radial direction side edge surface of the teeth to the tooth crest of the teeth.

8. The resin face gear according to any one of claims 5 to 7, wherein:
the predetermined lengths from the tooth crest of the teeth, the tooth flank on one side of the teeth, the tooth flank on the other side of the teeth, and the bottom land of the teeth to the edge line section are equal.

9. An injection-molding mold for a resin face gear including a plurality of teeth extending in an outward radial direction from an inward radial direction are formed along a circumferential direction of a web on one side surface of the web on an outward radial direction edge side, the injection-molding mold comprising:
a first mold and a second mold that form the resin face gear by molten resin being poured into a cavity formed in a butt section between the first mold and the second mold,
wherein, the first mold includes
a projecting section forming section that forms a projection section projecting from an outward radial direction side edge surface of the resin face gear to increase a radial direction dimension of the outward radial direction side edge surface, and
a butt surface between the first mold and the second mold includes a third mold and a fourth mold serving as a parting line that can discharge gas within the cavity during injection molding and is disposed in a position in which the parting line passes through the projecting section forming section.

10. An injection-molding mold for a resin face gear including a web and a plurality of teeth, the injection-molding mold for a resin face gear comprising:
a first mold and a second mold,
wherein, the first mold includes a first cavity forming section that forms the cavity,
the second mold includes a second cavity forming section that forms a cavity,
the first cavity forming section and the second cavity forming section form the cavity by the first mold and the second mold being butted together and the resin face gear is formed by molten resin being poured into the cavity,
the first mold includes
a curved section forming section that forms a curved surface having a smoothly curved surface in an intersecting section between a tooth crest of the teeth in the resin face gear and an outward radial direction side edge surface, an intersecting section between tooth flanks on both sides of the teeth and the outward radial direction side edge surface of the teeth, and an intersecting section between the bottom land of the teeth and the outward radial direction side edge surface of the teeth on the respective outward radial direction side edge surfaces of the teeth, and
a projection section forming section that forms a projecting section that projects from the outward radial direction side edge surface of the teeth and an outward radial direction side edge surface of the web to increase radial direction dimensions of the outward radial direction side edge surface of the teeth and the outward radial direction side edge surface of the web,
the projecting section forming section is formed so that a teeth corresponding section that corresponds with the outward radial direction side edge surface of the teeth, within the projecting section, is formed having a roughly-angled form imitating a tooth form of the teeth, and an edge line section of the teeth corresponding section is disposed in a position that is respectively separated by predetermined lengths from the tooth crest of the teeth, the tooth flanks on both sides of the teeth, and the bottom land of the teeth,
a predetermined length from the tooth crest of the teeth to a peak in the edge line section of the teeth corresponding section is longer than a length from a connection position between the curved section forming section and the outward radial direction side edge surface forming section to the tooth crest,
the first mold includes a third mold and a fourth mold, and
a butt surface between the third mold and the fourth mold forms a parting line that can discharge gas within the cavity during injection molding and is disposed in a position at which the parting line comes into contact with the teeth corresponding section in the projecting section.

11. The injection-molding mold for a resin face gear according to claim 9 or 10, wherein:
the parting line formed by the third mold and the fourth mold passes through a peak in the edge line section.

12. The injection-molding mold for a resin face gear according to any one of claims 9 to 11, wherein:
the third mold includes a teeth forming section forms that forms the teeth and an edge line section forming section; and
the fourth mold includes a cylindrical outer peripheral surface forming section that forms an outward radial direction side edge surface of the teeth corresponding section and an outward radial direction side edge surface of a web corresponding section corresponding to the web within the projecting section.

13. The injection-molding mold for a resin face gear according to any one of claims 9 to 12, wherein:
the cavity includes a gate used to inject the molten resin,
wherein, the gate is disposed closer to a center of the cavity than the teeth forming section in the cavity.
